# FASCICULE DE BREVET EUROPEEN

(11) **EP 2 104 543 B1**
(45) Date de publication et mention de la délivrance du brevet: **08.11.2017**
(21) Numéro de dépôt: 07872399.6
(22) Date de dépôt: 19.12.2007
(51) Int. Cl.: B01D 24/00, B01D 24/02, C02F 1/00

(54) **DISPOSITIF ET PROCÉDÉ DE FILTRATION D'EAU, EN PARTICULIER D'EAUX DE SURFACE**
VORRICHTUNG UND VERFAHREN ZUR FILTERUNG VON WASSER, INSBESONDERE OBERFLÄCHENWASSER
DEVICE AND METHOD FOR FILTERING WATER, IN PARTICULAR SURFACE WATER

(30) Priorité: 26.12.2006 FR 0611376
(43) Date de publication de la demande: 30.09.2009
(73) Titulaire: Suez International, 92040 Paris la Défense Cedex (FR)
(72) Inventeur: BONNELYE, Véronique, F-78700 Conflans Sainte Honorine (FR); VION, Patrick, F-78800 Houilles (FR)
(74) Mandataire: Cabinet Armengaud Aîné
(86) Numéro de dépôt international: PCT/FR2007/002112
(87) Numéro de publication internationale: WO 2008/093017

(56) Documents cités:
- US-A- 3 814 247
- US-A- 3 876 546
- US-A- 4 190 533
- US-A- 4 197 205
- US-A- 4 668 405
- US-A- 5 350 505
- US-A1- 2004 129 653
- US-A1- 2006 027 511

## Description

La présente invention est relative à un dispositif de filtration d'eau, en particulier d'eaux de surface, comportant un plancher au-dessus duquel sont positionnées une première couche de grains d'un premier média, de densité élevée et une seconde couche de grains d'un second média de densité plus faible que celle des grains du premier média, le diamètre moyen des grains du premier média étant inférieur à celui des grains du second média, le dispositif comprenant de plus une arrivée d'eau à filtrer dans la partie supérieure du dispositif au-dessus de la seconde couche et une sortie d'eau filtrée au-dessous de la première couche.

La clarification des eaux de surface, élimination de la turbidité et des particules, peut être réalisée par coagulation et filtration sur média granulaire, par association d'une coagulation - décantation ou flottation suivie d'une filtration sur média granulaire. Si la qualité de l'eau à traiter est bonne, le traitement de décantation ou flottation peut être supprimé de la filière de traitement, et l'on parle de filtration directe.

Il est reconnu que les filtres composés de couches de média multiples sont caractérisés par une capacité de rétention de matière plus élevée et une qualité d'eau filtrée supérieure à un filtre ne comportant qu'une couche de média de hauteur et de granulométrie équivalentes et lavé par simple mise en fluidisation. US20060027511, par exemple, décrit un dispositif pour la filtration d'eau comprenant une première couche de média fin, une seconde couche d'un média plus grossier, et des moyens d'injection prévus au niveau d'un plancher pour injecter un fluide de nettoyage.

L'emploi de filtre multimédia comportant plus de deux médias de filtration différents, typiquement trois à cinq médias, vise à se rapprocher d'un filtre idéal où la granulométrie évoluerait inversement au sens de filtration, les grains les plus gros étant localisés en surface du média, en contact avec l'eau à filtrer, et la taille granulométrie s'abaissant au fur et à mesure de l'affinage de l'eau filtrée.

Les filtres sont caractérisés principalement par leur seuil de coupure, paramètre directement lié à la granulométrie des médias mis en oeuvre et à la hauteur de média. Le choix du filtre, et principalement son seuil de coupure, est fonction de l'objectif de qualité et du taux de rétention des particules durant la filtration.

Dans un objectif de désinfection poussée, ou pour l'alimentation de procédés sensibles au colmatage comme les membranes d'osmose inverse, le traitement des eaux de surface nécessite la mise en oeuvre de procédés de clarification performants. Le filtre bicouche, associé à une coagulation optimisée répond parfaitement à cet objectif. Dans ce cas, on choisira un média de faible granulométrie.

Ce choix va à l'encontre de la capacité de rétention en matières en suspension du filtre, et aboutit à des durées de cycles de filtration incompatibles avec un fonctionnement industriel. Dans ce cas, l'application d'un filtre mettant en oeuvre plusieurs matériaux de granulométries différentes est choisie.

Le filtre comprend un support, appelé plancher, sur lequel sont positionnés les médias granulaires.

Le plancher peut être de nature poreuse, couche de gravier, tuyaux équipés de buses, plancher équipé de buses, cette dernière solution permettant la répartition des fluides de lavage, air et eau.

Le lit filtrant comprend généralement :
- éventuellement une ou plusieurs couches de gravier de grosse granulométrie pour protéger le plancher poreux et/ou les buses d'un contact direct avec les médias de filtration,
- une couche de média de granulométrie fine, de densité élevée, le plus souvent du sable ou du grenat,
- une couche de média de granulométrie plus grossière, de densité plus faible, le plus souvent de l'anthracite ou de la pierre ponce.

Le lavage d'un filtre de ce type se déroule généralement de la façon suivante:
- après arrêt du cycle de filtration, le niveau d'eau au-dessus du lit filtrant est abaissé, généralement par filtration,
- une phase de brassage à l'air est appliquée, l'air étant introduit par le dessous du plancher et réparti sur toute la section du filtre au moyen du plancher poreux ou équipé de buses. Cette phase est la partie énergique du lavage : les grains de média sont soumis à une agitation, il y a abrasion de la couche de particules/flocs retenus lors de la filtration. Durant cette phase, on assiste aussi à un mélange des couches de média de filtration,
- une phase de rinçage à l'eau seule, qui a pour but d'évacuer les particules précédemment séparées de l'eau et retenues dans le filtre, et de reclasser les différents médias afin de conserver au filtre son seuil de coupure et sa capacité de rétention.

Des variantes à ce lavage sont utilisées, notamment le lavage à l'eau seule par simple mise en expansion des médias : ce lavage présente pour principal inconvénient une inefficacité dans la séparation des flocs/média, qui conduit rapidement à la formation de « mud balls » ou agglomérats de boues et à une accumulation de matière dans le filtre au détriment de la capacité de rétention du média et à la durée de cycle de filtration. La qualité de l'eau filtrée peut être affectée par cette accumulation de matière et on assiste à une crevaison prématurée des particules, voire à un développement de biofilm c'est-à-dire d'un film composé de micro-organismes se développant à la surface du filtre, lié à la faible énergie mise en oeuvre et à l'absence d'abrasion durant le lavage.

Une autre variante consiste à appliquer une phase de lavage mettant en oeuvre de l'air et de l'eau, phase qui vient s'intercaler entre la phase air seul et la phase eau seule précédemment décrites, et qui permet d'améliorer l'efficacité de brassage et de transport de la matière retenue lors de la filtration. Cette phase se déroule cependant sans déversement pour éviter la perte de média, sauf si l'organe de récupération des eaux sales de lavage est équipé d'un dispositif spécifique.

Dans tous ces exemples, l'opération de nettoyage du filtre (de préférence à l'air) implique un mélange important des deux couches de média. Après nettoyage, un reclassement des deux médias, c'est-à-dire une reconstitution des couches correctement superposées, doit pouvoir s'opérer par la fluidisation des deux couches.

L'application d'une coagulation sur filtre, ou d'une filtration derrière une première étape de clarification par coagulation, floculation, décantation ou flottation, présente des limites du fait du compromis nécessaire à l'association de deux médias granulaires de densité et de granulométries différentes, afin de permettre le reclassement des deux médias et assurer ainsi les deux objectifs de rétention de matières en suspension et de qualité d'eau requis.

Selon l'état de la technique, le couple granulométrie / densité est généralement choisi de telle façon que le taux de mélange recherché durant la phase de nettoyage soit équivalent pour les deux médias et compris dans une fourchette de 5 à 30 %, typiquement entre 10 et 20 %. Le taux de mélange est la proportion de la masse filtrante où les deux médias sont mélangés.

Le taux d'expansion (c'est-à-dire le taux d'augmentation du volume apparent durant la phase de fluidisation) des deux matériaux doit être compris entre 10 et 20 % pour assurer un bon lavage (évacuation des matières accumulées) et un reclassement correct.

Pour avoir une capacité de rétention importante de matières en suspension dans le filtre et par conséquent une fréquence de lavage raisonnable, il faut un matériau de gros diamètre dans la couche supérieure pour stocker les matières en suspension sans engendrer une perte de charge importante.

Pour obtenir une eau filtrée de la meilleure qualité possible, il faut un matériau de faible granulométrie dans la couche inférieure.

Or, compte tenu de la densité des matériaux généralement disponibles, notamment le sable et l'anthracite, et de leur masse volumique, (respectivement 2.6 et 1.4 kg/L), il s'avère impossible d'avoir des matériaux de diamètres suffisamment différents pour atteindre en même temps ces deux objectifs : le rapport des diamètres est généralement de 2 ou 2,5 pour du sable et de l'anthracite. La limite de 2.5 pour le rapport des diamètres anthracite/sable est communément reconnue. On peut se référer pour cela au document de CONLEY, W.R et HSIUNG K.Y, "Filter design and application" JAWWA, February 1969, p97-101.

Ceci est une contrainte, compte tenu des différents médias granulaires utilisés. Le filtre bicouche sera donc soit bien adapté à la rétention de matières en suspension, au détriment du seuil de coupure, soit adapté à la rétention de particules, au détriment de la durée des cycles de filtration. Cela conduit souvent à la réalisation de deux étages de filtre bicouche.

L'invention a pour but surtout d'associer des matériaux granulaires permettant d'atteindre les deux objectifs de qualité d'eau filtrée et de rétention de matière en suspension avec une durée de cycle importante.

Selon l'invention un dispositif de filtration d'eau, en particulier d'eaux de surface, comportant un plancher au-dessus duquel sont positionnés une première couche d'un premier média ayant des grains de diamètre moyen Da, de densité élevée et une seconde couche d'un second média ayant des grains de diamètre moyen Db, de densité plus faible que celle des grains du premier média, Db étant supérieur à Da, le dispositif comprenant de plus une arrivée d'eau à filtrer dans la partie supérieure du dispositif au-dessus de la seconde couche et une sortie d'eau filtrée au-dessous de la première couche, est caractérisé en ce que :
- le rapport des diamètres moyens de grains Db/Da est tel qu'entre les grains du second média existent des interstices ayant des dimensions suffisantes pour permettre, après nettoyage, un écoulement gravitaire des grains du premier média à travers la seconde couche,
- le second média a une vitesse de fluidisation supérieure à celle du premier média,
- et des moyens d'injection d'un fluide de nettoyage sont prévus au niveau du plancher pour injecter le fluide avec une vitesse telle que le second média s'expanse d'une valeur comprise entre 2% et 10%.

Lors de la phase de brassage (à l'air) le taux de mélange est compris entre 70% et près de 100%. Selon l'invention, lors de la phase de rinçage ou nettoyage, la première couche de média A dont une grande partie se reforme rapidement sera entièrement fluidisée alors que la seconde couche B mélangée à A amorcera un début de détassage correspondant au début de fluidisation de B, accentué par le fait même du mélange qui en réduisant la porosité apparente du média (de plus de 50% pour B à 30% ou 40% dans les tranches basses du mélange B+A) abaisse la vitesse de fluidisation. Dans cette phase de rinçage, il y a donc fluidisation d'une partie de A rapidement reformé et une fluidisation significative du mélange B+A (expansion 5 à 15 %) de la zone de mélange B+A. Cette fluidisation du mélange B+A permet un reclassement partiel (augmentation de A et gradient de concentration de A dans B décroissant du bas au haut de la zone de mélange). A la fin de la phase de rinçage où des grains de A se trouvent encore au-dessus du lit filtrant, se réalise un classement gravitaire où les grains de A redescendent sous l'action de la pesanteur au travers les interstices des tranches supérieures de B. On se trouve donc devant une sorte de tri-couche (A, B+A, B). À un rapport Db / Da supérieur à trois correspond une vitesse de fluidisation de la seconde couche égale ou supérieure à deux fois la vitesse de fluidisation de la première couche. Dans le dispositif selon l'invention le rapport Db / Da est compris entre trois et six. Les grains du premier média A peuvent avoir un diamètre moyen inférieur ou égal à 0.4 mm et une densité supérieure à 2.2g/cm³. Les grains du second média B ont un diamètre moyen égal ou supérieur à 1.5 mm et une densité inférieure à 1.6g/cm³.

Le rapport de la densité des grains du premier média A à la densité des grains du second média B est de préférence inférieur à 2.

Selon une réalisation préférée, les grains du premier média A ont un diamètre moyen de 0,3 mm et une densité de 2,5 g/cm3 et les grains du second média B ont un diamètre moyen de 1.5 mm et une densité de 1,5 g/cm3, soit un rapport de diamètres de 5 et un rapport de densité de 1,66. Pendant le lavage, le matériau du premier média A, ou matériau inférieur, s'expanse de 10 à 40 % et le matériau du second média B, ou matériau supérieur, s'expanse de 2 à 10 % de telle sorte qu'il y a interpénétration du matériau inférieur dans le matériau supérieur, puis un reclassement partiel par gravité et création ainsi d'un filtre tri-couche constitué du matériau inférieur A, du matériau supérieur B et d'une zone intermédiaire de mélange. Ceci est rendu possible par le fait que le matériau supérieur s'expanse, sinon il n'y a pas suffisamment d'interpénétration.

L'invention est également relative à un procédé de nettoyage d'un tel dispositif.

Selon l'invention, un procédé de filtration d'eau, en particulier d'eaux de surface, met en oeuvre un dispositif de filtration comportant un plancher au-dessus duquel sont positionnés une première couche d'un premier média ayant des grains de diamètre moyen Da, de densité élevée et une seconde couche d'un second média ayant des grains de diamètre moyen Db, de densité plus faible que celle des grains du premier média, Db étant supérieur à Da, une arrivée d'eau à filtrer étant prévue au-dessus de la seconde couche et une sortie d'eau filtrée au-dessous de la seconde couche, et est caractérisé en ce que :
- le rapport des diamètres moyens de grains Db/Da est compris entre trois et six, les grains du second média B ont un diamètre moyen égal ou supérieur à 1,5 mm et une densité inférieure à 1,6 g/cm³, de sorte qu'entre les grains du second média B existent des interstices ayant des dimensions suffisantes pour permettre d'une part, lors de la phase de rinçage, un mélange B+A à très faible porosité qui réalise une expansion du mélange supérieure à celle de B seul et suffisante pour assurer un rinçage efficace et un reclassement acceptable, et d'autre part, après rinçage, un écoulement gravitaire des grains du premier média A à travers la seconde couche B qui permet d'obtenir une couche supérieure de B exempte de A,
- le second média a une vitesse de fluidisation supérieure à celle du premier média,
- et l'on injecte à travers le plancher un fluide de nettoyage à une vitesse telle que le second média B s'expanse d'une valeur comprise entre 2% et 10%.

Avantageusement, on injecte le fluide à une vitesse égale ou supérieure à la vitesse de fluidisation du second média B qui garantit une fluidisation et un reclassement minimaux de la zone de mélange B+A et l'évacuation des matières filtrées en haut du lit filtrant où B est très majoritaire. Le fluide injecté peut être de l'air. On peut injecter le fluide pendant une durée inférieure à 30 secondes.

Le fluide de rinçage est de l'eau filtrée injectée pendant un temps généralement inférieur à 10mn.

D'autres caractéristiques et avantages de l'invention apparaîtront dans la description qui suit d'un mode de réalisation avec référence aux dessins annexés mais qui n'a aucun caractère limitatif. Sur ces dessins :
Fig. 1 est une vue en coupe d'un filtre bicouche selon l'invention,
Fig. 2 est un détail agrandi de Fig. 1,
Fig. 3 est un détail de Fig. 1 à une échelle plus grande que Fig. 2, et
Fig. 4 est un graphe représentant :
   - d'une part une courbe Cm de variation du pourcentage de mélange en volume des deux médias lors de l'opération de nettoyage, avec en ordonnée le pourcentage de mélange et en abscisse la vitesse de l'eau de rinçage. Au départ après la phase de brassage à l'air, le mélange Cm est généralement compris entre 70% et près de 100%. Sur le graphe, c'est le point avant la phase de rinçage/reclassement donc à vitesse =0.
   - d'autre part deux courbes d'expansion Ca, Cb correspondant aux deux médias A et B, avec en ordonnée le pourcentage d'expansion en volume apparent et en abscisse la vitesse de l'eau de lavage ou de rinçage.

Afin de pouvoir obtenir une eau de très grande qualité et des durées de cycle importantes, l'invention associe une première couche de grains d'un premier média naturel de faible granulométrie et de densité élevée, à une seconde couche de grains d'un second média naturel de granulométrie plus élevée et de densité plus faible, les vitesses de fluidisation des deux médias n'étant pas similaires pour une hauteur d'expansion de chaque média de 5 à 30 % typiquement de 10 à 20 %.

Pour cela on utilise deux matériaux A et B de densités différentes avec des grains de diamètres moyens Da, Db tels que Db / Da ≥ 3. Db / Da est typiquement compris entre 3 et 6. Les vitesses de fluidisation et de sédimentation de A sont plus faibles que celles de B.

Dans la zone B+A, la porosité diminue (pour l'anthracite la porosité ou zone de vide entre grains est comprise entre 50 et 55% et pour la zone de mélange elle passe en dessous 40%), et donc d'après les lois de Kozeny-Carman la vitesse minimum de fluidisation diminue ou encore pour une vitesse de fluidisation donnée, la vitesse d'expansion augmente.

On peut aussi parler des survitesses réalisées dans cette zone de mélange qui complètent le nettoyage et le déplacement des matières filtrées du filtre.

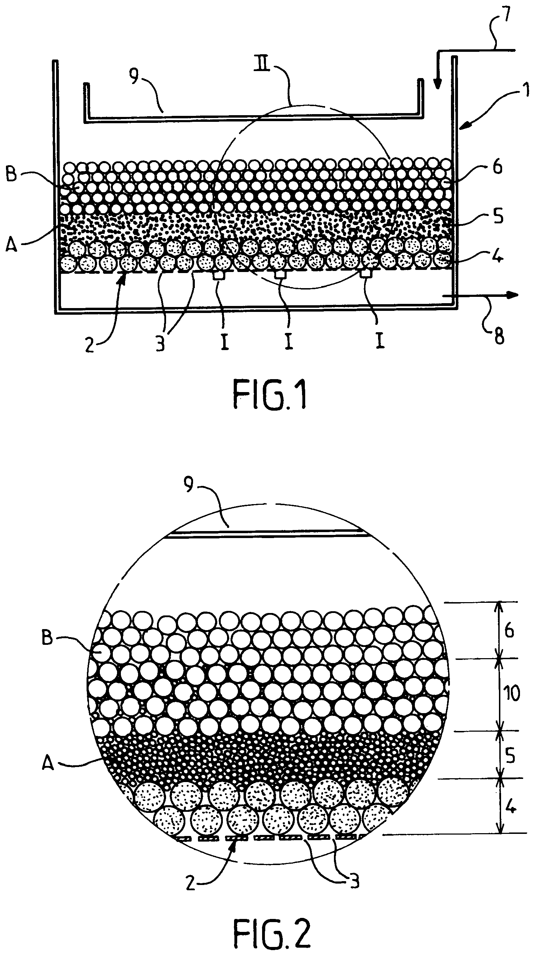

Les ouvrages de génie civil nécessaires ne comportent pas de différences notables avec ceux de l'état de la technique. La structure du filtre de l'invention est illustrée Fig. 1. On utilise un bassin 1 comportant dans sa partie basse un plancher 2 muni d'orifices 3 et de moyens d'injection 1.

Sur le plancher 2 est disposée une couche 4 de gravier de grosse granulométrie pour protéger le plancher et les buses d'un contact direct avec les médias de filtration.

Une première couche 5 d'un média A de diamètre moyen Da est disposée au-dessus de la couche 4. Une seconde couche 6 d'un média B de diamètre moyen Db supérieur à Da est disposée au-dessus de la couche 5. La disposition des couches est plus particulièrement visible sur le détail illustré Fig.2.

Une arrivée 7 d'eau à traiter est prévue en partie haute au-dessus de la seconde couche 6. Une sortie 8 d'eau traitée est prévue en partie basse, au-dessous du plancher 2 et de la première couche 5.

Une goulotte 9 de réception des déchets et flocs est prévue au-dessus de la couche 6.

La hauteur de la goulotte 9, par rapport à la couche 6 au repos, est calculée pour permettre l'évacuation des déchets sans perdre les matériaux A et B.

Lors du nettoyage / rinçage, assuré par un courant de fluide, généralement de l'eau de lavage , injecté de bas en haut par les moyens d'injection I, la vitesse du courant injecté est choisie voisine de (c'est-à-dire égale ou légèrement supérieure à) la vitesse de fluidisation de la seconde couche B.

Sur la base des connaissances techniques antérieures, un homme du métier n'accepterait pas de telles conditions car elles devraient conduire au mélange des matériaux des couches ou du moins au non reclassement et à la déstructuration du filtre après lavage avec passage de la couche fine A au-dessus de B. L'objectif ne serait alors pas atteint, la capacité du filtre devenant alors très faible.

Le résultat effectif est surprenant et contredit cette première analyse du fait des conditions opératoires mais surtout du fait de la différence importante entre les diamètres des matériaux. On constate le processus exposé ci-après.

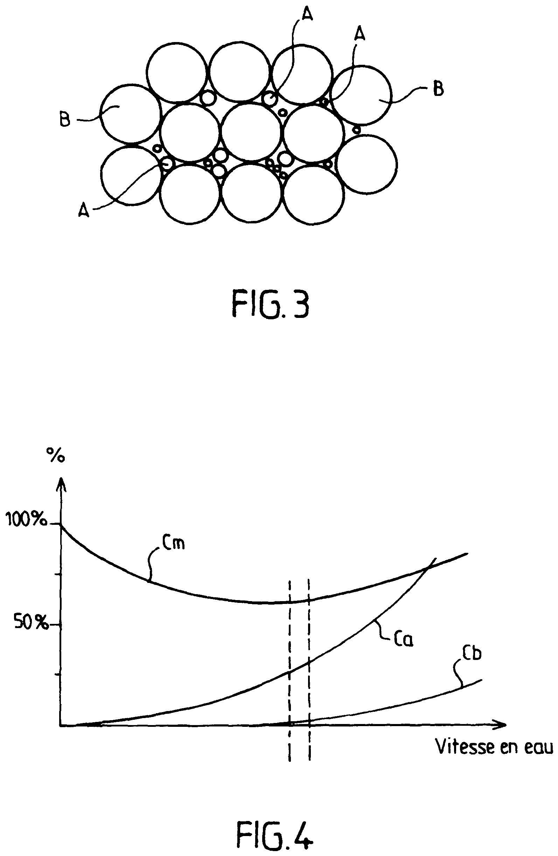

La vitesse de lavage est définie pour un couple A/B. Les courbes Ca et Cb visibles sur Fig. 4 illustrent le pourcentage d'expansion des médias A et B en fonction de la vitesse d'injection de l'eau de lavage.

La courbe Cm représente le pourcentage en volume de la zone où A et B sont mélangés lors de l'opération de lavage, en fonction de la vitesse d'injection de l'eau de lavage. Le % Cm à la vitesse =0, correspond à l'état du mélange à la fin de la phase de brassage à l'air (entre 70 et près de 100%). Lors de l'opération de lavage, le reclassement se fait plus ou moins en fonction de la vitesse d'eau de lavage. On choisit une vitesse de lavage dans la zone encadrée par des pointillés, correspondant au minimum de Cm, ce qui correspond également à l'amorce de Cb, c'est-à-dire au début de fluidisation du second média B, alors que le premier média A est déjà fluidisé.

Le minimum de Cm encore relativement élevé, d'environ 50% (entre 30 et 60% suivant les cas) pourrait conduire à ne pas utiliser un tel couple A/B.

Mais, grâce à la descente par gravité des grains du média A à travers la seconde couche B après lavage, une couche de média B exempte de A se forme en haut du filtre.

Un reclassement est donc possible selon l'invention, avec restructuration du filtre en trois couches : A, mélange B+A, B.

Pour le nettoyage, on utilise des buselures pour injecter de l'eau filtrée à travers le plancher 2 à une vitesse égale ou supérieure à la vitesse de fluidisation du média B.

Le matériau A partiellement et très vite reformé, se fluidise le premier et connaît une expansion de 50 à 80%.

La zone de mélange B+A va s'expanser d'une valeur comprise entre l'expansion de A et l'expansion de B, généralement comprise entre 5 et 15% . Cette expansion s'avère suffisante pour le lavage et un reclassement partiel.

Le matériau B s'accumule en surface. Il commence sa fluidisation. son taux d'expansion est assez faible (de 2 % à 10 %) mais suffisant pour assurer un détassage permettant l'évacuation des matières retenues pendant la filtration. Vers la fin du lavage, on peut constater qu'une couche du matériau A recouvre toute la surface du lit.

L'élimination totale de A dans la tranche supérieure de B est réalisée gravitairement lors de l'arrêt du lavage.

Les deux matériaux A et B ont des densités différentes et des diamètres de grains de préférence tels que Db / Da > 4. Les vitesses de fluidisation et de sédimentation de A sont plus faibles que celles de B.

On pourrait donc s'attendre à ce que le reclasssement soit impossible.

L'expérience a montré que ce n'est pas le cas contrairement à ce que l'homme du métier pouvait supposer.

Lors du lavage, une couche de matériau A apparait rapidement car il se forme un « pseudo liquide » de densité assez grande avec le matériau A qui a tendance à faire « flotteur » les éléments ou grains du média B plus légers se présentant à l'interface (modèle de T.R. Camp discuté par Cleasby : J.L. Cleasby « Intermixing of dual media and multi-média granular filters »-JAWWA,April 1975, pp 195-203.)

Le mélange B+A créé par le brassage a une porosité globale très faible du fait du rapport Db / Da élevé qui permet au matériau A de se loger dans les interstices importants du matériau B. Du fait de sa porosité réduite, la vitesse de fluidisation du mélange est bien plus faible. En conséquence, l'expansion du mélange B+A est plus forte (de quelques %) que celle de B à la même vitesse de lavage. Cette expansion est suffisante pour réaliser un bon rinçage. On observe un reclassement important dans les tranches supérieures et partiel dans les zones basses du mélange. Ce phénomène inattendu peut s'expliquer par le modèle du pseudo liquide (voir plus haut) de forte densité formé par A qui à l'interface fait flotter les éléments du média B et absorbe les éléments du média A. Une trop forte vitesse de fluidisation conduit comme l'indique la courbe de la fig 4 à remélanger les médias en privilégiant les phénomènes de fluidisation et d'entraînement au détriment du phénomène du pseudo liquide.

Lors de l'arrêt du lavage, le lit descend et lorsque le matériau B a fini de décanter, les grains sont en contact les uns avec les autres. Les grains de A qui se trouvent encore au-dessus et dans la tranche supérieure du matériau B descendent par gravité dans les interstices situés entre les grains de B jusqu'à leur remplissage. Le diamètre équivalent moyen des interstices est de deux à six fois plus grand que celui des grains de A. Il y a donc un arrangement gravitaire dans la phase d'arrêt qui permet d'obtenir une couche B supérieure exempte d'éléments du média A.

On se trouve alors bien devant une sorte de tri-couche plus particulièrement visible Fig. 2.

Si l'on part d'un filtre bicouche dont la première couche A représente 45 % de la hauteur totale et la seconde couche B représente 55 % de la hauteur totale, on peut constater l'arrangement suivant après lavage:
- une couche inférieure 5 de matériau A représentant 30 à 40 % de la hauteur totale,
- une couche supérieure 6 de matériau B représentant 10 à 30 % de la hauteur totale,
- une zone intermédiaire 10 d'un mélange A/B, représentant 30 à 60 % de la hauteur totale, avec un gradient de concentration de A dans B, de A fortement concentré en bas à A faiblement concentré en haut.

### Exemple 1

Pour un premier exemple de réalisation, le média A est constitué de sable dont les grains ont un diamètre moyen (taille effective) de 0.3 mm, et de vitesse minimale de fluidisation 5 m/h. Le second média B est constitué d'anthracite dont les grains ont un diamètre moyen (taille effective) de 1.5 mm et de vitesse minimale de fluidisation 35 m/h. La vitesse de rinçage à l'eau à appliquer est de 35 m/h à 20°C.

### Exemple 2

Pour un second exemple de réalisation, le média A est constitué de sable de taille effective 0.3 mm et de vitesse minimale de fluidisation 5 m/h. Le second média B est constitué de pierre ponce de taille effective 1.7 mm et de vitesse minimale de fluidisation 30 m/h. La vitesse de rinçage à l'eau à appliquer est de 30 m/h à 20°C.

En production, les résultats sont aussi étonnants.

### Exemple 3

Afin d'illustrer les gains obtenus par l'invention en termes d'efficacité de filtration et de productivité, une étude comparative a été réalisée en filtration directe d'eau de mer, après coagulation avec un sel de fer. Le tableau ci-dessous récapitule les résultats de cette étude.

| Filtre | Matériaux | | Durée de cycle de filtration (H) | Qualité de l'eau filtrée (moyenne sur un cycle de filtration) | | |
|---|---|---|---|---|---|---|
| | anthracite | sable | | turbidité (NTU) | Silt Density Index (ASTM 4189-95) | particules >2 µm/mL |
| 1 | TE 1.5 mm | TE 0.75 mm | 32 | 0.25 | 5.2 | 148 |
| 2 (invention) | TE 1.5 mm | TE 0.3 mm | 31.5 | 0.072 | 2.5 | 25 |
| 3 | TE 0.75 mm | TE 0.3 mm | 5 | 0.086 | 3.1 | 45 |

Le filtre 1 équipé de média Anthracite 1,5 et sable 0.75 a une durée de cycle de filtration élevée, mais la qualité de l'eau filtrée est dégradée et incompatible avec une alimentation de membrane d'osmose inverse.

Le filtre 3 équipé de média de granulométrie plus faible possède une qualité d'eau améliorée, mais la durée de cycle de filtration est très courte et incompatible avec un fonctionnement industriel.

Seul le filtre 2, avec des matériaux sélectionnés suivant l'invention, permet d'atteindre les objectifs de qualité tout en maintenant une durée de cycle de filtration élevée, généralement supérieure à 24 h sur les applications traditionnelles.

L'efficacité du lavage est démontrée par un suivi sur plusieurs cycles de filtration de la perte de charge du média filtrant après lavage. La perte de charge après lavage reste stable au cours du temps sur plusieurs cycles, ce qui permet de confirmer l'efficacité du lavage du média.

La qualité de l'eau filtrée est compatible avec les niveaux d'exigences élevés des procédés de dessalement et ceci en un seul étage de filtration.

Cette invention comporte de nombreux avantages. Elle permet notamment une rétention de matières en suspension élevée, assurant des durées de cycles de filtration longues et une diminution des pertes d'eau de lavage et de l'énergie consommée.

L'invention autorise également des seuils de coupure très bas permettant d'assurer une excellente élimination des particules et flocs, et ceci avec un seul étage de filtration. Ceci contraste avec les habitudes actuelles où l'obtention d'une telle efficacité est généralement réalisée par la mise en oeuvre de deux étages de filtration, le premier retenant le maximum de matières en suspension.

L'invention permet en outre un lavage efficace avec des vitesses en eau plus faibles que celles généralement employées pour la mise en expansion de tous les matériaux de 10 à 30%, ce qui conduit à des équipements de lavage de taille et donc d'un coût d'investissement plus faible.

En particulier, l'invention peut permettre une alimentation de membranes d'osmose inverse avec un seul étage de filtre bicouche. Au moins deux étages de filtre bicouche selon l'état de la technique étaient habituellement nécessaires pour alimenter directement des membranes d'osmose inverse. La multiplication des étages de filtre bicouche ou de dispositifs ayant la même fonction augmente le coût d'investissement et l'emprise foncière de l'installation.

## Revendications

1. Dispositif de filtration d'eau, en particulier d'eaux de surface, comportant un plancher (2) au-dessus duquel sont positionnées une première couche (5) d'un premier média (A) ayant des grains de diamètre moyen Da, de densité élevée et une seconde couche (6) d'un second média (B) ayant des grains de diamètre moyen Db, de densité plus faible que celle des grains du premier média (A), Db étant supérieur à Da, le dispositif comprenant de plus une arrivée d'eau à filtrer (7) dans la partie supérieure du dispositif au-dessus de la seconde couche (6) et une sortie d'eau filtrée (8) au-dessous de la première couche (5), **caractérisé en ce que** :
- le rapport des diamètres moyens de grains Db/Da est compris entre trois et six,
- les grains du second média B ont un diamètre moyen égal ou supérieur à 1,5 mm et une densité inférieure à 1,6 g/cm³,
- de sorte qu'entre les grains du second média (B) existent des interstices ayant des dimensions suffisantes pour permettre, après nettoyage, un écoulement gravitaire des grains du premier média (A) à travers la seconde couche,
- le second média (B) a une vitesse de fluidisation supérieure à celle du premier média (A),
- et des moyens d'injection (I) d'un fluide de nettoyage sont prévus au niveau du plancher (2) pour injecter le fluide avec une vitesse telle que le second média (B) s'expanse d'une valeur comprise entre 2% et 10%.

2. Dispositif de filtration de l'eau selon l'une quelconque des revendications précédentes, **caractérisé en ce que** les grains du premier média A ont un diamètre moyen inférieur à 0,4 mm et une densité supérieure à 2,2 9/cm³.

3. Dispositif de filtration de l'eau selon l'une quelconque des revendications précédentes, **caractérisé en ce que** le rapport de la densité des grains du premier média A à la densité des grains du second média B est inférieur à 2.

4. Dispositif de filtration de l'eau selon la revendication 3, **caractérisé en ce que** les grains du premier média A ont un diamètre moyen de 0,3 mm et une densité de 2,5 g/cm³ et les grains du second média B ont un diamètre moyen de 1,5 mm et une densité de 1,5 g/cm³.

5. Dispositif de filtration de l'eau selon l'une quelconque des revendications précédentes, **caractérisé en ce que** la vitesse de fluidisation de la seconde couche est égale ou supérieure à deux fois la vitesse de fluidisation de la première couche.

6. Procédé de filtration d'eau, en particulier d'eaux de surface, mettant en oeuvre un dispositif de filtration comportant un plancher au-dessus duquel sont positionnés une première couche d'un premier média A ayant des grains de diamètre moyen Da, de densité élevée et une seconde couche d'un second média B ayant des grains de diamètre moyen Db, de densité plus faible que celle des grains du premier média, Db étant supérieur à Da, une arrivée d'eau à filtrer étant prévue au-dessus de la seconde couche et une sortie d'eau filtrée au-dessous de la première couche, ce procédé permettant de réaliser le rinçage dudit dispositif de filtration, **caractérisé en ce que** :
- le rapport des diamètres moyens de grains Db/Da est compris entre trois et six,
- les grains du second média B ont un diamètre moyen égal ou supérieur à 1,5 mm et une densité inférieure à 1,6 g/cm³,
- de sorte qu'entre les grains du second média B existent des interstices ayant des dimensions suffisantes pour permettre d'une part, lors de la phase de rinçage, un mélange B+A à très faible porosité qui réalise une expansion du mélange supérieure à celle de B seul et suffisante pour assurer un rinçage efficace et un reclassement acceptable, et d'autre part, après rinçage, un écoulement gravitaire des grains du premier média A à travers la seconde couche B qui permet d'obtenir une couche supérieure de B exempte de A,
- le second média a une vitesse de fluidisation supérieure à celle du premier média,
- et l'on injecte à travers le plancher un fluide de nettoyage à une vitesse telle que le second média (B) s'expanse d'une valeur comprise entre 2% et 10%, l'injection du fluide de nettoyage permettant de réaliser le rinçage dudit dispositif.

7. Procédé selon la revendication 6, **caractérisé en ce que** l'on injecte le fluide à une vitesse égale à la vitesse de fluidisation du second média (B).

8. Procédé selon la revendication 6 ou 7, **caractérisé en ce que** le fluide injecté est de l'eau.

9. Procédé selon la revendication 6 ou 7, **caractérisé en ce que** le fluide injecté est de l'air.

10. Procédé selon l'une quelconque des revendications 6 à 9, **caractérisé en ce que** l'on injecte le fluide pendant une durée inférieure à 30 secondes.

## Patentansprüche

1. Vorrichtung zur Filterung von Wasser, insbesondere von Oberflächenwasser, mit einem Boden (2), über welchem eine erste Schicht (5) eines ersten Mediums (A), das Körner mit einem mittleren Durchmesser Da und einer hohen Dichte aufweist, und eine zweite Schicht (6) eines zweiten Mediums (B), das Körner mit einem mittleren Durchmesser Db und einer Dichte aufweist, die geringer als die Dichte des ersten Mediums (A) ist, wobei Db größer als Da ist, wobei die Vorrichtung ferner im oberen Bereich der Vorrichtung oberhalb der zweiten Schicht (6) einen Einlass (7) für zu filterndes Wasser und unterhalb der ersten Schicht (5) einen Auslass (8) für gefiltertes Wasser aufweist, **dadurch gekennzeichnet, dass**:
- das Verhältnis der mittleren Durchmesser der Körner Db/Da zwischen drei und sechs beträgt,
- die Körner des zweiten Mediums B einen mittleren Durchmesser gleich oder größer als 1,5 mm und eine Dichte von weniger als 1,6 g/cm³ aufweisen,
- derart, dass zwischen den Körnern des zweiten Mediums (B) Zwischenräume bestehen, deren Abmessungen ausreichen, um nach dem Reinigen ein Fließen der Körner des ersten Mediums (A) unter Schwerkraft durch die zweite Schicht hindurch zu ermöglichen,
- das zweite Medium (B) eine höhere Fluidisierungsgeschwindigkeit als das erste Medium (A) aufweist,
- und Einrichtungen (I) zum Einspritzen eines Reinigungsfluids in Höhe des Bodens (2) vorgesehen sind, um das Fluid mit einer derartigen Geschwindigkeit einzuspritzen, dass das zweite Medium (B) sich um einen Wert zwischen 2% und 10% ausdehnt.

2. Vorrichtung zur Filterung von Wasser nach einem der vorhergehenden Ansprüche, **dadurch gekennzeichnet, dass** die Körner des ersten Mediums A einen mittleren Durchmesser von weniger als 0,4 mm und eine Dichte größer als 2,2 g/cm³ aufweisen.

3. Vorrichtung zur Filterung von Wasser nach einem der vorhergehenden Ansprüche, **dadurch gekennzeichnet, dass** das Verhältnis der Dichte der Körner des ersten Mediums A zur Dichte der Körner des zweiten Mediums B kleiner als 2 ist.

4. Vorrichtung zur Filterung von Wasser nach Anspruch 3, **dadurch gekennzeichnet, dass** die Körner des ersten Mediums A einen mittleren Durchmesser von 0,3 mm und eine Dichte von 2,5 g/cm³ aufweisen, und die Körner des zweiten Mediums B einen mittleren Durchmesser von 1,5 mm und eine Dichte von 1,5 g/cm³ aufweisen.

5. Vorrichtung zur Filterung von Wasser nach einem der vorhergehenden Ansprüche, **dadurch gekennzeichnet, dass** die Fluidisierungsgeschwindigkeit der zweiten Schicht gleich oder höher als das Doppelte der Fluidisierungsgeschwindigkeit der ersten Schicht ist.

6. Verfahren zur Filterung von Wasser, insbesondere von Oberflächenwasser, unter Verwendung einer Filtervorrichtung mit einem Boden, über welchem eine erste Schicht eines ersten Mediums A, das Körner mit einem mittleren Durchmesser Da und einer hohen Dichte aufweist, und eine zweite Schicht eines zweiten Mediums B, das Körner mit einem mittleren Durchmesser Db und einer Dichte aufweist, die geringer als die Dichte des ersten Mediums ist, wobei Db größer als Da ist, wobei oberhalb der zweiten Schicht ein Einlass für zu filterndes Wasser und unterhalb der ersten Schicht ein Auslass für gefiltertes Wasser vorgesehen ist, wobei das Verfahren das Spülen der Filtervorrichtung ermöglicht, **dadurch gekennzeichnet, dass**:
- das Verhältnis der mittleren Durchmesser der Körner Db/Da zwischen drei und sechs beträgt,
- die Körner des zweiten Mediums B einen mittleren Durchmesser gleich oder größer als 1,5 mm und eine Dichte von weniger als 1,6 g/cm³ aufweisen,
- derart, dass zwischen den Körnern des zweiten Mediums B Zwischenräume bestehen, deren Abmessungen ausreichen, um einerseits während der Spülphase eine Mischung B+A mit sehr geringer Porosität zu bilden, welche ein Ausdehnen der Mischung ermöglicht, das stärker als das Ausdehnen von B allein ist, und ausreicht, um ein wirksames Spülen und eine akzeptable Neuordnung zu gewährleisten, und andererseits nach dem Spülen ein Fließen der Körner des ersten Mediums A unter Schwerkraft durch die zweite Schicht B hindurch zu ermöglichen, wodurch ermöglicht wird, eine obere Schicht aus B ohne A zu erhalten,
- das zweite Medium eine höhere Fluidisierungsgeschwindigkeit als das erste Medium aufweist,
- und ein Reinigungsfluid durch den Boden mit einer derartigen Geschwindigkeit eingespritzt wird, dass das zweite Medium (B) sich um einen Wert zwischen 2% und 10% ausdehnt, wobei das Einspritzen des Reinigungsfluids das Spülen der Vorrichtung ermöglicht.

7. Verfahren nach Anspruch 6, **dadurch gekennzeichnet, dass** das Fluid mit einer Geschwindigkeit eingespritzt wird, die gleich der Fluidisierungsgeschwindigkeit des zweiten Mediums (B) ist.

8. Verfahren nach Anspruch 6 oder 7, **dadurch gekennzeichnet, dass** das eingespritzte Fluid Wasser ist.

9. Verfahren nach Anspruch 6 oder 7, **dadurch gekennzeichnet, dass** das eingespritzte Fluid Luft ist.

10. Verfahren nach einem der Ansprüche 6 bis 9, **dadurch gekennzeichnet, dass** das Fluid während eines Zeitraums von weniger als 30 Sekunden eingespritzt wird.

## Claims

1. A water filtration device, in particular for surface water, comprising a floor (2) above which are positioned a first layer (5) of a first media (A), comprising particles of average diameter Da, of high density, and a second layer (6) of a second media (B), comprising particles of average diameter Db, of lower density than that of the particles of the first media (A), Db being greater than Da, the device further including a raw water feed (7) in the upper portion of the device above the second layer (6) and a filtered water outlet (8) below the first layer (5), **characterized in that**:
- the ratio of the average particle diameters Db/Da is between three and six,
- the particles of the second media B have an average diameter equal to or greater than 1.5 mm and a density of less than 1.6 g/cm³,
- such as interstices exist between the particles of the second media (B) which have dimensions sufficient to allow, after cleaning, gravity flow of the particles of the first media (A) through the second layer,
- the second media (B) has a fluidization velocity greater than that of the first media (A),
- and injection means (I) are provided for injecting a cleaning fluid into the floor (2), the fluid being injected with a velocity such that the second media (B) expands by an amount of between 1% and 10%.

2. The water filtration device as claimed in any one of the preceding claims, **characterized in that** the particles of the first media A have an average diameter of less than 0.4 mm and a density greater than 2.2 g/cm³.

3. The water filtration device as claimed in any one of the preceding claims, **characterized in that** the ratio of the density of the particles of the first media A to the density of the particles of the second media B is less than 2.

4. The water filtration device as claimed in claim 3, **characterized in that** the particles of the first media A have an average diameter of 0.3 mm and a density of 2.5 g/cm³ and the particles of the second media B have an average diameter of 1.5 mm and a density of 1.5 g/cm³.

5. The water filtration device as claimed in any one of the preceding claims, **characterized in that** the fluidization velocity of the second layer is equal to or greater than twice the fluidization velocity of the first layer.

6. A water filtration process, in particular for surface water, employing a filtration device comprising a floor above which are positioned a first layer of a first media A, comprising particles of average diameter Da, of high density, and a second layer of a second media B, comprising particles of average diameter Db, of lower density than that of the particles of the first media, Db being greater than Da, a raw water feed being provided above the second layer and a filtered water outlet below the first layer, this process allowing the rinsing of said filtration device, **characterized in that**:
- the ratio of the average particle diameters Db/Da is between three and six,
- the particles of the second media B have an average diameter equal to or greater than 1.5 mm and a density of less than 1.6 g/cm³,
- such as interstices exist between the particles of the second media B which have dimensions sufficient to allow, on the one hand, during the rinsing phase, a mixture B+A of very low porosity that will undergo an expansion which is greater than that of B alone and is sufficient to ensure effective rinsing and acceptable restratification and, on the other hand, after rinsing, a gravity flow of the particles of the first media A through the second layer B, making it possible to obtain an upper layer of B devoid of A,
- the second media has a fluidization velocity greater than that of the first media,
- and injecting a cleaning fluid into the floor, the fluid being injected with a velocity such that the second media (B) expands by an amount of between 1% and 10%, injecting the cleaning fluid allowing the rinsing of said device.

7. The process as claimed in claim 6, **characterized in that** the fluid is injected with a velocity equal to the fluidization velocity of the second media (B).

8. The process as claimed in claim 6 or 7, **characterized in that** the injected fluid is water.

9. The process as claimed in claim 6 or 7, **characterized in that** the injected fluid is air.

10. The process as claimed in any one of claims 6 to 9, **characterized in that** the fluid is injected over a period of less than 30 seconds.
